# EUROPEAN PATENT APPLICATION

(11) **EP 3 310 103 A1**
(43) Date of publication of application: **18.04.2018**
(21) Application number: 17196626.0
(22) Date of filing: 16.10.2017
(51) Int. Cl.: H04W 64/00

(54) **METHOD FOR OPERATING A SYSTEM COMPRISING A PLURALITY OF NODES, CORRESPONDING SYSTEM AND MEDICAL EQUIPMENT PROVIDED WITH A NODE**

(30) Priority: 14.10.2016 NL 2017621
(71) Applicant: RePoint B.V., 8445 PE Heerenveen (NL)
(72) Inventor: Punt, Johannes Gerhardus Franciscus, 9125 EC Oostrum (NL)
(74) Representative: Verdijck, Gerardus

(57) **Abstract**

The invention relates to methods for operating a system, a base station and a node. The invention also relates to a system and computer program arranged to carry out such method, and further relates to medical equipment provided with a node arranged to carry out such method. The method comprises:
- alternatingly switching each node between a sending mode, wherein consecutive messages are sent at a regular interval to the base station, and a receiving mode,
wherein in the sending mode, an announcement message is sent,
wherein the base station:
- receives consecutive messages sent by at least one node;
- determines the interval between the consecutive messages;
- receives the announcement message;
- determines the time when the node will switch to the receiving mode on the basis of the received announcement message and the determined interval; and
- sends at least one message to the at least one node at the determined time.

## Description

The invention relates to a system comprising a base station and a plurality of nodes in wireless communication with said base station. The invention further relates to a method for operating said system, a method for operating a base station of such a system and a method for operating a node of such a system. In particular, the invention relates to medical equipment provided with a node arranged to carry out the method for operating the node. The invention further relates to a computer program arranged to execute said method when said computer program is executed on a computer.

WO 2012/074379 A1 describes a system for locating a node. The system comprises a processor unit and a plurality of base stations which together form network connections. The system further comprises a plurality of nodes. Each base station is connected to an antenna system and includes a received signal strength indication (RSSI) measurement unit for determining an RSSI parameter of a signal transmitted by the nodes. Each node comprises a transceiver for wireless communication, wherein the transceiver is powered by a battery of the node.

A drawback of existing systems for wireless communication between a base station and a plurality of nodes is that the battery of the nodes may drain quickly due to the high energy demand of the transceiver for wireless communication.

A goal of the present invention is to reduce the above mentioned drawback and to provide an improved method for operating a system comprising a base station and a plurality of nodes in wireless communication with said base station. Said goal is achieved with the method according to embodiments of the invention.

In an embodiment of a method for operating a system comprising a base station and a plurality of node in wireless communication with said base station, the method comprises:
- alternatingly switching each node between a sending mode, wherein the node sends consecutive messages at a regular interval to the base station, and a receiving mode, wherein the node receives at least one message from the base station,
wherein each node, in its sending mode, sends an announcement message indicating when said node will switch to the receiving mode, wherein preferably the announcement message is included in at least one of the consecutive messages sent by said node, the method further comprising:
- receiving, by the base station, consecutive messages sent by at least one node;
- determining, by the base station, the interval between the consecutive messages received from the at least one node;
- receiving, by the base station, the announcement message from said at least one node;
- determining, by the base station, the time when the at least one node will switch to the receiving mode on the basis of the received announcement message and the determined interval; and
- sending, by the base station, at least one message to the at least one node at the determined time.

In an embodiment of a corresponding method for operating a node in a system comprising a base station and a plurality of nodes in wireless communication with said base station, the method comprises:
- alternatingly switching the node between a sending mode, wherein the node sends consecutive messages at a regular interval to the base station, and a receiving mode, wherein the node receives at least one message from the base station,
wherein, in the sending mode, the node sends an announcement message indicating when the node will switch to the receiving mode.

In an embodiment of a corresponding method for operating a base station in a system comprising the base station and plurality of nodes in wireless communication with the base station, the method comprising:
- receiving, by the base station, consecutive messages sent by at least one node;
- determining, by the base station, the interval between the consecutive messages received from the at least one node;
- receiving, by the base station, an announcement message indicating when the at least one node will switch to a receiving mode;
- determining, by the base station, the time when the at least one node will switch to the receiving mode on the basis of the received announcement message and the determined interval; and
- sending, by the base station, at least one message to the at least one node at the determined time.

Embodiments of any of the methods of the invention may in particular be applied to systems for tracking and tracing. In an preferred example, the methods are applied in systems for tracking and tracing medical equipment, such as medical devices. For example, the system can be applied for tracking and tracing a hospital bed, an intravenous (IV) apparatus, an infusion pump, a heart rate monitor, an imaging apparatus (such as an X-ray apparatus or an ultrasound apparatus), a blood pressure monitor, an anaesthetic machine or a defibrillator. However, the method may also be applied to other systems comprising a plurality of nodes in communication with one or more base stations.

The nodes preferably comprise a transceiver for wireless communication with the base station. The transceiver is preferably battery-powered. The battery of a node may further power other electronic components of the node. Such other electronic components are optional and may include a sensor, such as an accelerometer, a temperature sensor, a heart rate sensor, a blood pressure sensor, or a humidity sensor. Further examples of optional electronic components of the node include lights, such as LEDs, and/or a display and/or an audio output. The node preferably comprises a central processing unit and/or a controller connected to the transceiver for controlling the wireless communication operation.

The base station preferably comprises a transceiver for wireless communication with the nodes. The base station may be battery-powered. However, preferably the base station is powered by connection to mains power.

In the sending mode, a node communicates with a base station by sending messages at a regular interval. The regular interval may be adjustable. For example, a user may program the node to set a predetermined interval. In another example, the base station may send a control message to the node for adjusting the interval, said control message including data representative for the interval to be set, wherein the node adjusts its regular interval upon receipt of the control message, on the basis of the data representative for the interval to be set. Optionally, also other settings of the nodes can be adjusted in response to messages from the processing unit and/or user input and/or other node and/or other devices, such as scanners, tablets, pda's etc.

The regular interval is for example an interval between 0.1 ms and Is, corresponding to a frequency of 1 Hz - 10 kHz. Preferably the regular interval is between 1 ms and 100 ms, for example 20 ms.

In the sending mode, the node sends a series of consecutive messages to the base station. The number of messages may be fixed, i.e. each series of consecutive messages sent in the sending mode may comprise the same number of messages. Alternatively, the number of messages within each series is not fixed, and may be different for different series of consecutive messages. The number of messages to be sent within a sending mode may for example be determined by the node, e.g. by a controller or CPU of the node, for example according to a program stored on the node.

The nodes switch to the receiving mode after the consecutive messages have been sent. In other words, during a first time window the node is in the sending mode and sends a series of consecutive messages to the base station. In a second time window, which is preferably shorter than the first time window, the node is in the receiving mode and receives at least one message of the base station.

The base station determines the interval between the consecutive messages received from a node.

In a first example, the messages sent by the node may include a time stamp indicating the time the message was sent, and the base station may calculate the time between time stamps. The base station may calculate the difference between the first and last time stamp of the series and divide it by the number of messages in the series minus one. For example, three messages may include time stamps 10:43:12, 10:43:32 and 10:43:52. The base station may calculate the difference between the first and last time stamp, e.g. 40 s, and divide it by the number of messages minus one, e.g. 3 - 1 = 2, to obtain the interval, e.g. 40 s / 2 = 20 s. In another example, the base station calculates the difference between each consecutive time stamp, and determines the interval as the mode, mean or median of the calculated differences.

In a second example, the base station registers the time when the messages are received by the base station and calculates the difference between registered times. The base station may calculate the difference between the first and last registered receipt times of a series of messages and divide it by the number of messages in the series minus one. For example, the base station registers receipt of three messages at 10:50:03, 10:50:23 and 10:50:43. The base station may calculate the difference between the first and last time stamp, e.g. 40 s, and divide it by the number of messages in the series minus one, e.g. 3 - 1 = 2, to obtain the interval, e.g. 40 s / 2 = 20s. In another example, the base station calculates the difference between each consecutive receipt time, and determines the interval as the mode, mean or median of the calculated differences.

In a third example, one or more messages sent by the node include an indication of the interval between the messages.

A node communicates to the base station when it will switch to the receiving mode, by sending at least one announcement message. Preferably, the announcement message is included in at least one of the consecutive messages sent in the sending mode.

By sending messages at a regular interval and only receiving messages during predefined time windows, the wireless communication of the node is implemented in an energy efficient way. This is in particular relevant for a battery-powered node. Embodiment of the invention enables an improved battery life of the node due to the energy efficient wireless communication protocol.

Preferably, each of the consecutive messages sent by the node includes an identifier uniquely identifying the node sending said message. The base station may receive messages from multiple nodes, simultaneously or consecutively, and the identifier enables the base station to distinguish between the nodes. For example, the regular interval for a particular node is determined by the base station on the basis of only those messages that include the identifier of said particular node.

In preferred embodiments of the method for operating the system, the method for operating the base station and the method for operating the node, the regular interval between the consecutive messages in the sending mode of a first node of the plurality of nodes differs from the regular interval between the consecutive messages in the sending mode of a second node of the plurality of nodes.

Different nodes of the system may use a different regular intervals for sending messages to a base station. In order to be able to send messages from the base station to each node at the right time, i.e. when said node is in the receiving mode, the base station has to synchronize with the receiving mode of each of the nodes. The base station determines the regular interval between consecutive messages for each of the nodes individually, thereby taking into account possible differences between different nodes. Moreover, each node sends an announcement message indicating when it will switch to the receiving mode, such that the base station can determine when the receiving mode for that particular node commences.

Preferably, the announcement message comprises data indicative for the number of remaining messages to be sent.

For example, the announcement message indicates that M further messages will be sent after the current message before switching to the receiving mode. In another example, the announcement message indicates that M + 1 messages, including the current messages, will be sent before switching to the receiving mode. In another example, the node may include the total number of messages to be sent, such that the base station can calculate the number of remaining messages on the basis of the number of messages received and the total number of messages indicated in the announcement message.

Preferably, more than one of the consecutive messages includes an announcement message, each announcement message comprising data indicative for the number of remaining messages to be sent.

For example, the N last messages of a series of consecutive messages sent in a sending mode may each include an indication of the number of remaining messages. This may be implemented as a counter. For example, in a series of N messages, the M ≤ N last messages of the series may include an indication of the number of remaining messages. In an example wherein the announcement message indicates the number of remaining messages after the current message, i.e. excluding the current message, each of the M messages may indicate N - i, wherein i is the index of the message in the series. In an alternative example wherein announcement message indicates the number of remaining messages including the current message, each of the M messages may indicate N - i + 1.

For example, in a series of 100 messages, the 20 last messages may each include the integer 100 - i as announcement message to indicate the number of remaining messages after the current message i. In effect, the announcement messages of consecutive message count down from 19 to 0. In another example, the 20 last messages may include the integer 100 - i + 1 as announcement message to indicate the number of remaining messages, including the current message i. In effect, the announcement messages count down from 20 to 1. In these two examples it is assumed that the index i of the first message is equal to 1. If the first index is set to 0, the calculation needs to be adapted accordingly, i.e. 1 should be subtracted.

In preferred embodiment of the method for operating the system and the method for operating the base station, determining of the time when the at least one node will switch to the receiving mode comprises multiplying the number of remaining messages by the interval determined by the base station.

In other words, the base station determines the remaining time the node is in the sending mode. The remaining time may be recalculated each time an announcement message is received. The base station may determine when the node will switch to the receiving mode on the basis of the remaining time.

Preferably, the time between sending the last of the consecutive messages and the start of the receiving mode corresponds to the regular interval.

In such a case, the starting time of the receiving mode may be determined as: starting time = (number of remaining message after the current message + 1) * interval; or alternatively as: starting time = (number of remaining messages including the current message ) * interval.

In preferred embodiments of the method for operating a system and the method for operating a base station, the system comprises at least two base stations each in wireless communication with a plurality of nodes and further comprising a processing unit in communication with the at least two base stations, wherein each base station comprises a received signal strength indication, RSSI, measurement unit for determining a RSSI parameter of nodes communicating with said base station, the method comprising:
- determining, by each base station, the RSSI parameter of the nodes communicating with said base station using the RSSI measurement unit;
- sending, by each base station, the determined RSSI parameters to the processing unit; and
- selecting, by the processing unit, a single one of the at least two base stations as the base station for sending the at least one message to the at least one node, on the basis of the RSSI parameters of the at least one node.

The RSSI parameter may for example be the power of a received signal, an average power level of a number of received signals, or another statistic of the power of a number of received signals.

For example, the base station and/or the processing unit and/or the node may respectively be a base station, processing unit and identification unit as described in WO 2012/074379 A1,which is hereby incorporated by reference in its entirety. In particular, the system may be a system for localization of a node as described in WO 2012/074379.

Preferably, the processing unit compares the RSSI level of the at least one node for the different base stations, and select the base station observing the highest RSSI level as the base station for communication with the at least one node. The RSSI level may refer to an average RSSI value observed by the base station for the at least one node, a mode of the RSSI values observed by the base station for the at least one node, or a median of the RSSI values observed by the base station for the at least one node.

In other words, the processing unit select a base station which has the most optimal wireless communication with the at least one node. Often, the base station observing the highest RSSI level will also be physically closest to the node, however this need not always be the case. As an alternative, the processing unit may select the base station closest to the at least one node for sending the message.

The invention further relates to a method for operating a system comprising a processing unit and a plurality of nodes in communication with said processing unit, wherein at least one node comprises a visual indicator unit arranged to indicate whether said at least one node is in a first state, a second state or a third state, the method comprising:
- receiving, by the at least one node, a trigger signal;
- if the at least one node is in the first state, switching the at least one node to the second state upon receipt of the trigger signal and sending a state indication message from the at least one node to the processing unit;
- receiving, by the processing unit, the state indication message sent by the at least one node;
- determining, by the processing unit, that the at least one node is in the second state on the basis of the received state indication message,
- determining, by the processing unit, the location of the node;
- determining, by the processing unit, whether the location of the node corresponds to a predetermined location;
- if the processing unit determines that the location of the node corresponds to the predetermined location and the node is in the second state: sending, by the processing unit, a state control message to the node;
- switching the at least one node to the third state upon receiving the state control message.

The invention further relates to a corresponding method for operating a processing unit in a system comprising a processing unit and a plurality of nodes in communication with said processing unit, wherein at least one node comprises a visual indicator unit arranged to indicate whether said at least one node is in a first state, a second state or a third state, the method comprising:
- receiving, by the processing unit, a state indication message from the at least one node;
- determining, by the processing unit, that the at least one node is in the second state on the basis of the received state indication message,
- determining, by the processing unit, the location of the node;
- determining, by the processing unit, whether the location of the node corresponds to a predetermined location; and
- if the processing unit determines that the location of the node corresponds to the predetermined location and the node is in the second state: sending, by the processing unit, a state control message to the node.

The invention further relates to a corresponding method for operating a node in a system comprising a processing unit and a plurality of nodes in communication with said processing unit, wherein the node comprises a visual indicator unit arranged to indicate whether the node is in a first state, a second state or a third state, the method comprising:
- receiving, by the node, a trigger signal;
- if the node is in the first state, switching the node to the second state upon receipt of the trigger signal and sending a state indication message from the node to the processing unit;
- switching the node to the third state upon receiving a state control message from the processing unit.

The method for operating the system, the method for operating a node and the method for operating a processing unit described in the previous three paragraphs are preferably used with a system for localisation of a node, more preferably a system as described in WO 2012/074379. In addition or alternatively, the methods of the last three paragraphs are preferably combined with the methods described above for energy efficient communication between a base station and a node.

The visual indicator unit of the at least one node may for example comprise at least one light, such as an LED, and/or a display. In a preferred embodiment, each state of the node is visualized with a different colour, shown by one or more lights, such as LEDs, and/or by a display.

For example, the node has a green LED for indicating the first state, an orange LED for indicating the second state and a red LED for indicating the third state.

The first state may correspond to a "safe" state, the second state to an "alert" state and the third state to an "unsafe state".

In preferred embodiments, the at least one node comprises at least one sensor and the trigger signal is generated by the at least one node based on the output of the at least one sensor.

The sensor for example comprises an accelerometer, a temperature sensor, a heart rate sensor, a blood pressure sensor, or a humidity sensor. For example, the trigger signal is generated when the accelerometer detects that the node has experienced a shock, e.g. due to a fall or collision of the object to which the node is attached.

In preferred embodiments, the trigger signal is generated by the system and send to the at least one node.

Preferably, the trigger signal is generated by the system if the current date is equal to a predetermined date recorded for the at least one node.

For example, the processing unit may be embodied in a server, wherein the server keeps track of maintenance dates for objects, such as medical equipment, provided with a node as described above. When the maintenance date has passed, the processing unit sends a trigger signal to the corresponding node, which switches to the second state upon receipt of the trigger signal. When later on the node is moved to a predetermined location, e.g. the medical equipment provided with the node is moved to a hallway, the node switches to the third state. For example, the third state indicates that the medical equipment is not to be used and preferably to be placed into a special storage for equipment to be send for maintenance.

Preferably, the node sends a further state indication message from the node to the processing unit when the node switches to the third state. Upon receipt of said further state indication message, the processing unit may take appropriate action. For example, the processing unit may send a message, such as an e-mail or text message, to maintenance staff for collecting the object provided with the node. In some of the preferred embodiments of the invention an additional or alternative step is performed. After the node received a message from the base station it will switch to another state. When the base station receives a further message from the node it will determine whether the node has changed its state and, accordingly, whether the earlier message from the base station was actually received by the node. The base station will send a message to the processing unit that determines whether the earlier message will be re-send. This step enables performing of an error-check in the communication. It is noted that this step can be performed independent from the aforementioned (further) state indication message.

The invention further relates to a method for operating a system for localisation of a node, the system comprising a processing unit and a plurality of nodes in communication with said processing unit, the method comprising:
- receiving, by a first node, a signal from a second node;
- determining, by a first node, a received signal strength indication, RSSI, parameter of a second node on the basis of the received signal;
- determining, via the first node and by the processing unit or base station, or by the first node, if the RSSI parameter satisfies a predetermined condition;
- if the first node determines that the RSSI parameter of the second node satisfies the predetermined condition, sending, by the first node, a message to the processing unit including an identifier of the second node;
- linking, by the processing unit, the second node to the first node upon receipt of the message from the first node; and
- determining, by the processing unit, the location of the second node as the location of the first node when the second node is linked to the first node.

The invention further relates to a corresponding method for operating a first node in a system for localisation of a node, the system comprising a processing unit and a plurality of nodes in communication with said processing unit, the method comprising:
- receiving, by the first node, a signal from a second node;
- determining, by the first node, a received signal strength indication, RSSI, parameter of a second node on the basis of the received signal;
- determining, by the first node, if the RSSI parameter satisfies a predetermined condition; and
- if the first node determines that the RSSI parameter of the second node satisfies the predetermined condition, sending, by the first node, a message to the processing unit including an identifier of the second node.

The invention further relates to a corresponding method for operating a processing unit in a system for localisation of a node, the system comprising a processing unit and a plurality of nodes in communication with said processing unit, the method comprising:
- receiving, by the processing unit, from a first node a message including an identifier of the second node;
- linking, by the processing unit, the second node to the first node upon receipt of the message from the first node; and
- determining, by the processing unit, the location of the second node as the location of the first node when the second node is linked to the first node.

The method for operating the system, the method for operating a node and the method for operating a processing unit described in the previous three paragraphs are preferably used with a system for localisation of a node as described in WO 2012/074379. In addition or alternatively, the methods of the last three paragraphs are preferably combined with the methods described above for energy efficient communication between a base station and a node and/or the methods described above in relation to a system with a node comprising a visual indicator unit.

The invention further relates to a system and/or base station and/or node and/or processing unit arranged to carry out one of the methods described above. In particular, the invention relates to medical equipment, such as a medical device, provided with a node arranged to carry out a method for operating a node as described above.

Furthermore, the invention relates to a computer program arranged to, when executed on a computer, execute one of the methods described above.

Further advantages, details and effects of embodiments of the invention will be described on the basis of exemplary embodiments thereof, wherein reference is made to the accompanying figures.
- Figure 1A shows schematically a system according to an embodiment of the invention;
- Figure 1B shows schematically an example of a node of the system of figure 1A;
- Figure 2 illustrates communication between a node and a base station of the system of figure 1A;
- Figure 3 illustrates communication between two nodes and a base station of the system of figure 1A;
- Figure 4 illustrates a system according to another embodiment of the invention, wherein the nodes have a visual indicator for indicating one of at least three state;
- Figure 5 illustrates a further embodiment of a system of the invention; and
- Figure 6 schematically illustrates a scenario of applying the system of the invention in a hospital.

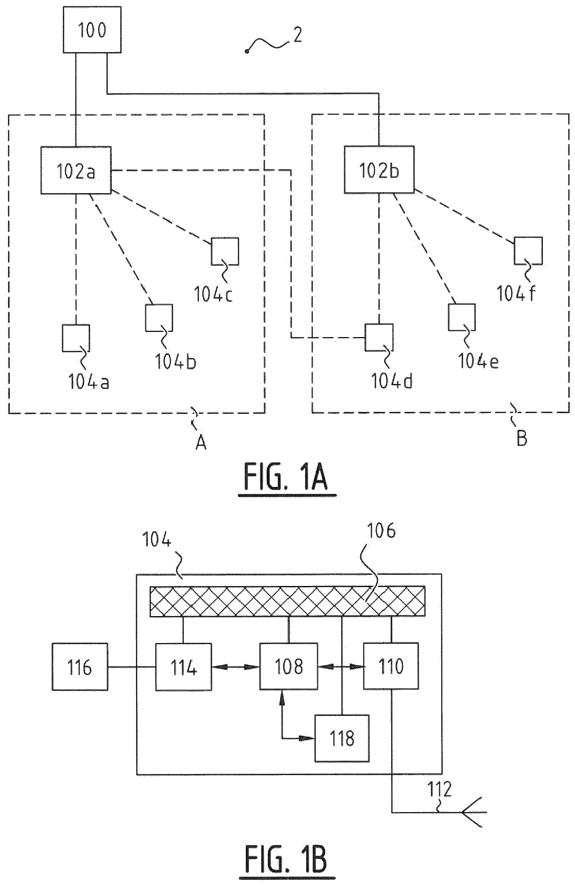

System 2 (figure 1A) includes a processing unit 100, which may for example be embodied as a server, or a number of servers, in communication connection with a number of base stations 102a-b, also known as gateways. Preferably, the base stations 102a-b are powered by a connection to mains. Preferably, the base stations 102a-b communicate via a wired connection with processing unit 100, although wireless communication is alternatively possible.

The system 100 may for example correspond to a system for localization of a node as described in WO 2012/074379.

Each base station 102a-b wirelessly communicates with a number of nodes 104a-f. In the example shown, a first zone A and a second zone B is indicated, wherein a first base station 102a is located within zone A, while a second base station 102b is located within zone B.

It is noted that the nodes 104a-f may be wirelessly connected to more than one base station 102a-b. As an example, the figure shows a node 104d being connected wirelessly to both base stations 102a-b.

The nodes 104a-f are battery operated. An example of a node 104 is shown in figure 1B. The nodes 104a-f include a battery 106 and a controller, e.g. a central processor unit (CPU), 108. The controller 108 is powered by the battery 106. The nodes 104a-f further include a transceiver 110, which is also powered by the battery 106, and which is controlled by controller 108. The transceiver 110 is connected to an antenna or antenna array 112.

Optionally, the nodes 104a-f may comprise a sensor interface, which is powered by the battery and controlled by the controller 108. Sensor 116 may be connected to the sensor interface. The sensors 116 may be integrated in the node 104a-f or may be embodied as a separate unit which is connectable to the nodes 104a-f via the sensor interface.

Optionally, the nodes 104a-f may comprise a visual indicator 118 for indicating a state of the node 104a-f. The visual indicator 118 is powered by the battery 106 and controlled by the controller. For example, the visual indicator 118 may include a display or one or more LEDs. For example, the visual indicator has a green, orange and red LED for indicating three different states.

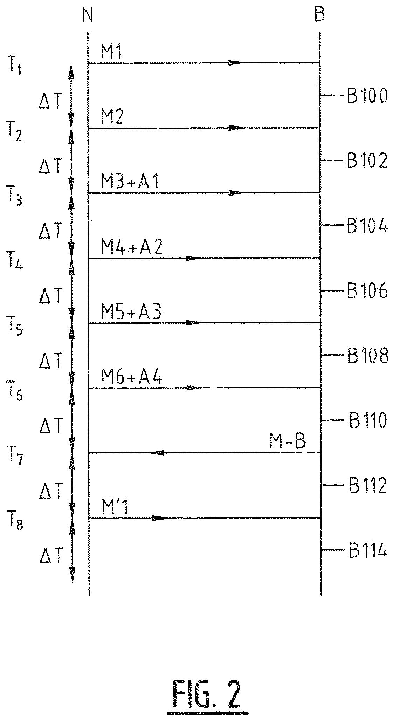

In an example, the system 2 of figures 1 and 2 is applied for tracking and tracing medical equipment and/or personnel in a hospital. The nodes 104a-f may for example be attached to a hospital bed, an intravenous (IV) apparatus, an infusion pump, a heart rate monitor, an imaging apparatus (such as an X-ray apparatus or an ultrasound apparatus), a blood pressure monitor, an anaesthetic machine or a defibrillator. For example, one or more of the nodes 104a-f may comprise a sensor 116 arranged to detect a shock. For example, the sensor 116 is embodied as an accelerometer. The sensor 116 may for example detect that the medical equipment fall on the ground or experience another form of collision. The node may communicate occurrence of such an event to the corresponding base station 102a. The base station may relay the message to the processing unit 100.

Figure 2 shows an example of communication between a node N and a base station B. T1-T8 indicate consecutive points in time, wherein the interval ΔT between two points in time is the same in the example shown. For example, the interval ΔT is 10 ms. At time T1 the node N sends a message M1 to the base station B, which is continuously listening for messages of the nodes. At time T2, the node N sends a second message M2.

At time T3, the node N sends a third message M3, which includes a first announcement message A1. The announcement message A1 indicates that 3 more messages will be sent after message M3. At time T4, the node N sends a fourth message M4, which includes a second announcement message A2 indicating that 2 more messages will be sent, at time T5 the node N sends a fifth message M5 including a third announcement message A3 indicating that 1 more message will be sent, and at time T6 the node N sends a sixth message M6 including a fourth announcement message A4 indicating that no further messages will be sent.

At time T7 the node has switched to the receiving mode for receiving a message from the base station B. Preferably, the time interval between T6 and T7 is equal to the regular interval Δ1 between each of the messages M1-M6. At time T8 the node has switched back to the sending mode to start a new sequence of sending messages to the base station B, the new sequence starting with message M'1. The new sequence of messages M' to be sent may include a different number of messages than the first sequence M1-M6. The new sequence may even be sent at a different interval than the first sequence, although the same interval ΔT may also be used if desired.

The messages M1-M6 and M'1 may for example include sensor data, measured by a sensor 116 connected to the node 104. Alternatively or additionally, the message M1-M6 and M' 1 may include a RSSI-parameter measured by the node, e.g. of an RSSI parameter measured on the basis of a signal from another node or a base station 102a-b.

The base station B receives the messages M1-M6 and the announcement messages A1-A4 from the node N. At time B100, between T1 and T2, and at time B102, between T2 and T3, the base station B may process the message M1 and M2 respectively. For example, in case the message M1 includes sensor data, the base station B may process the sensor data or relay the sensor data to the processing unit 100.

At one or more of the times B102-B110, the base station B may determine an interval between the consecutive messages M1-M6. For example, the base station B may determine the interval at each of the times B102-B110, or the base station B may determine the interval only at time B110.

For example, at B104, the base station B may extract a time stamp of the messages M1 and M3 and determine the time difference between these time stamps. Subsequently, the base station B may divide the time difference by the number of received messages minus one, i.e. by 3-1 = 2, to obtain the interval ΔT, or at least an estimate thereof. At time B106, the base station B may update the determined time interval ΔT, e.g. improve the accuracy of the determined time interval, on the basis of a time stamp included in the message M4.

When the base station B1 receives a message M3-M6 including an announcement message A1-A4, the base station may extract the announcement message A1-A4. The base station B1 determines when the node N will switch to the receiving mode on the basis of the received announcement messages. For example, the base station B may determine on the basis of announcement message A1 that 3 messages will be sent by node N after M3. As the base station has also determined ΔT, the base station may determine T7, i.e. the time when node N is switched to the receiving mode. For example, at B104 the base station B adds 1 to the number of remaining messages, i.e. 3 + 1 = 4, and multiplies the result by the determined ΔT, i.e. 4 * ΔT, to obtain an estimate of time T7.

If a message M-B is to be sent from the base station B to the node N, the base station B sends the message M-B to node N at the determined estimate of time T7.

The communication protocol illustrated in figure 2 increases battery life of the nodes 104a-f, as the nodes N only listen for messages from base station B data during predetermined time windows.

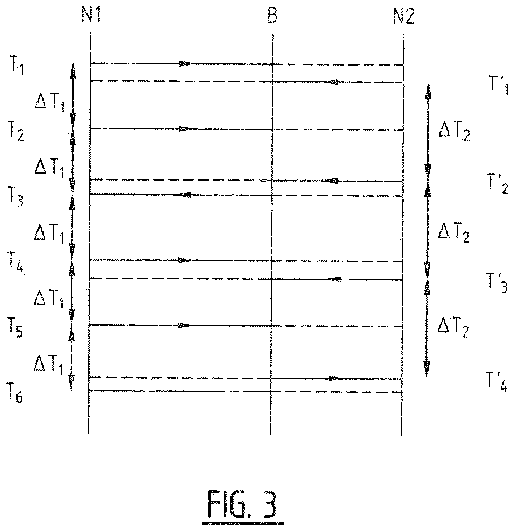

The base station B can communicate with different nodes N, as illustrated in figure 3. Node N1 sends messages at interval ΔT₁, while node N2 sends messages at interval ΔT₂, which is different from ΔT₁. As the base station B determines the interval for each node N1, N2 independently, the base station B is able to communicate with each node N1, N2, even when they are not synchronized and/or when they operate using different time intervals.

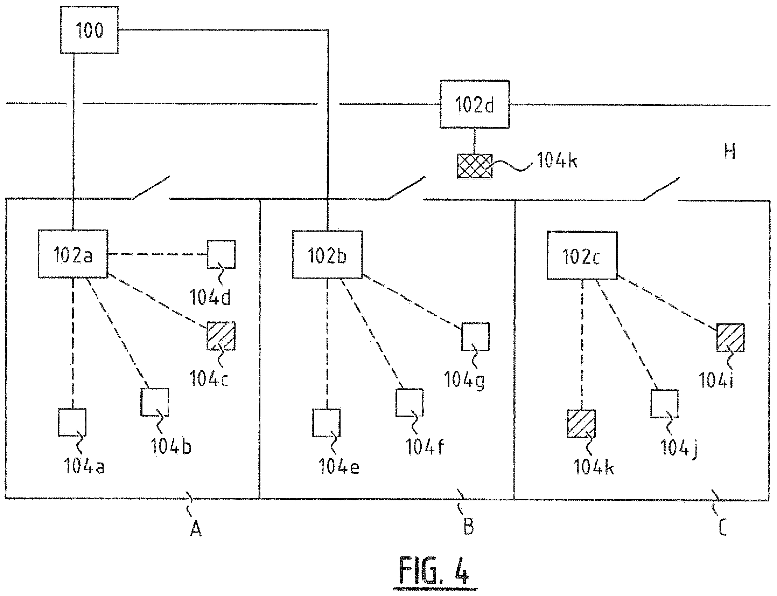

Figure 4 is a schematic illustration of an application of an embodiment of the system of the invention in a hospital environment. The hospital comprises a number of rooms A, B, C, wherein each room is equipped with a base station 102a, 102b, 102c respectively. Alternatively, several or all of rooms A, B, C are seen from a single base station 102. The processing unit 100 differentiates rooms A, B, C based on data received from the base station(s) 102. The rooms are accessible via a hallway H, which hallway H is also equipped with a base station 102d.

A number of nodes 104a-k is attached to medical equipment or carried by personnel. The nodes 104a-k is mobile and may be tracked and traced by the system. Figure 4 shows a situation wherein room A comprises nodes 104a-d, room B comprises nodes 104e-g, and room C comprises nodes 104h-j. A node 104k is positioned in the hallway H. It is noted that the location of the nodes may change, as the medical equipment to which the nodes are attached is moved or the medical staff carrying the nodes move.

The system determines which of the base stations 102a-c is to communicate with a particular node on the basis of RSSI data. As an example, node 104d may be in communication range of both base station 102a and base station 102b. Both base stations 102a, 102b measure an RSSI parameter of signals received from node 104d. The base stations 102a, 102b communicate said RSSI parameter to the processing unit 100, which selects one of the base stations 102a, 102b for sending messages to the nodes 104d.

In the exemplary embodiment of figure 4, the processing unit 100 determines which of the base stations 102a, 102b receives the greatest power level of the node 104d. In the illustrated example, the power received at base station 102a from signals of node 104d is greater than the power received at base station 102b from signals of node 104d. Therefore, the processing unit 100 determines that base station 102a receives the greatest power level from signals of node 104d, and selects base station 102a as the base station 102a for sending messages to node 104d. The processing unit 100 communicates said selection to base station 102a, and optionally also to other base stations 102b, 102c.

Initially the nodes 104a-k may be in a first state, also referred to as a 'safe' state or 'OK' state, indicating that the medical equipment attached to the node may be used by the medical staff. The nodes 104a-k may however switch to a second state, also referred to as an 'alarm' state or 'action required' state, indicating that the medical equipment must undergo technical maintenance as soon as possible. Furthermore, the nodes 104a-k may switch to a third state, also referred to as a 'do not use' state or 'disabled' state.

The states may be indicated by the nodes 104a-k by means of the visual indicator unit 118 described above. In particular, the first state may be indicated using a green light, the second state may be indicated using an orange light and the third state may be indicated using a red light.

In the example of figure 4, the nodes 104c, 104h and 104i are in the second state, while the node 104k is in the third state.

The processing unit 100 stores maintenance dates for medical equipment, in particular for individual medical devices. For example, node 104c may be attached to an infusion pump, for which a maintenance date is set for 1 Sept 2019. If the processing unit 100 determines that the actual date corresponds to the maintenance date, it sends a trigger signal to the node 104c via the base station 102a. Upon receiving the trigger signal, the node 104c switches to the second state, as illustrated in figure 4. In the second state, the node 104c switches on an orange LED of visual indicator 118. Therefore, the medical staff is alerted that, as soon as the infusion pump is not coupled to a patient anymore, it should be moved to the maintenance department. To this end, the medical staff may move the infusion pump to the hallway H for pick up by the maintenance department. When the system detects that a node 104a-k that is in the second state is positioned in the hallway H, the system sends a state control message to said node, to switch the node to the third state. In figure 4, the node 104k has been switched to the third state. In this example, the node 140k has switched on a red light for indicating that it is in the third state. Therefore, it is clear to medical staff that the medical equipment to which the node 104k is attached, e.g. an infusion pump, may not be used anymore. Furthermore, upon detecting that the node 104k in the second state is positioned in the hallway H, the system, e.g. the processing unit 100, may automatically send a message to the maintenance department, including the location of the node 104k for picking up the medical equipment.

In another example, the node 104c is equipped with a sensor for detecting a shock, such as a collision or falling of the node 104c. If the infusion pump to which the node 104c is attached accidentally falls or bumps into another object, the sensor detects said event. If the measured sensor value exceeds a predetermined level, the node 104c automatically switches to the second state, indicating that the infusion pump to which the node 104c is attached needs to be checked by the maintenance department, as the collision may have affected the functioning of the pump. The node 104c may optionally communicate the detected collision to the processing unit 100 via the base station 102a. The collision event may be communicated to the maintenance department by the processing unit 100, wherein a location of the node 104c may also be included.

The nodes 104a-k may also switch immediately from the first state to the third state for selected trigger signals. For example, the nodes 104a-k may be arranged to immediately switch to the third state upon detecting a shock exceeding a predetermined level.

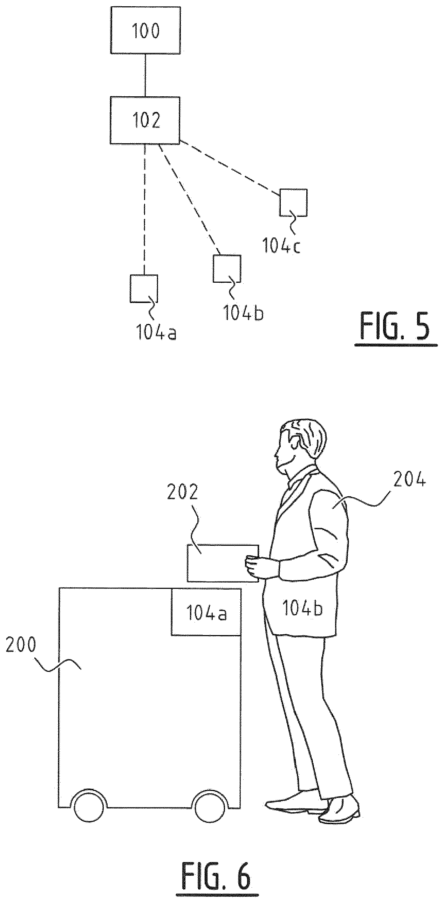

Figure 5 illustrates automatically associating different nodes to each other. The system includes a processing unit 100, a base station 102 and a number of nodes 104a-c communicating with said base station 102. Each node 104a may receive signals from other nodes 104b and determine an RSSI parameter of said other node 104b on the basis of the received signal. The node 104a may determine whether the RSSI parameter satisfies a predetermined condition. In particular, the node 104a may determine whether an RSSI power level exceeds a predetermined threshold. In case the condition is fulfilled, the node 104a may send a message to the processing unit 100, via the base station 102, identifying the other node 104b. Said message indicates to the processing unit 100 that the nodes 104a, 104b are relatively close to each other. Therefore, the processing unit may link the first node 104a to the second node 104b, e.g. in a database the nodes 104a and 104b may be linked. The processing unit 100 may subsequently determine the location of the second node 104b on the basis of the location of the first node 104a.

The processing unit 100 may even link nodes 104a to nodes 104b which is not able to communicate with the base station 102 and the processing unit 100. For example, node 104b may only be able to communicate using short range wireless communication, e.g. using NFC or passive RFID, while node 104a is able to communicate with base station 102.

In another example (figure 6), even medical equipment not provided with a node 104 may be linked with one or more of the nodes 104. In the example shown, a medical rack 200 is equipped with a node 104a for communication with processing unit 100 via a base station 102. Furthermore, a small medical equipment, such as a defibrillator 202, may be placed on medical rack 200 and/or coupled thereto. The medical staff 204 carries a node 104b, which communicates with the processing unit. The node 104b may be connected to a scanner for identifying defibrillator 202. For example, the scanner may comprise a bar code scanner, a NFC reader or an RFID reader. The medical staff 204 scans the device 202 using the scanner, upon which the node 104b sends the identifier to the processing unit 100, including the location of the node 104b. The processing unit 100 determines that the node 104b is close to node 104a and links the device 202 to node 104a in its internal database. Therefore, when the mobile rack 200 is moved, also the position of the device 202 is tracked, even though the device 202 is not equipped with its own node 104a. Also, it is possible to scan the identification, such as a QR code, on a node and as a next step scan one or more devices that are linked in the system to the node in a similar manner as described before.

The invention is by no means limited to the above described preferred embodiments thereof. The rights sought are defined by the following claims, within the scope of which many modifications can be envisaged.

## Claims

1. Method for operating a system (2) comprising a base station (102a-b) and a plurality of nodes (104a-f) in wireless communication with said base station (102a-b), the method comprising:
- alternatingly switching each node (104a-f) between a sending mode, wherein the node (104a-f) sends consecutive messages at a regular interval between the consecutive messages to the base station (102a-b), and a receiving mode, wherein the node (104a-f) receives at least one message from the base station (102a-b),
wherein each node (104a-f), in its sending mode, send an announcement message indicating when the corresponding node (104a-f) will switch to the receiving mode, the method further comprising:
- receiving, by the base station (102a-b), consecutive messages sent by at least one node (104a-f);
- determining, by the base station (102a-b), the interval between the consecutive messages received from the at least one node (104a-f);
- receiving, by the base station (102a-b), the announcement message from the at least one node (104a-f);
- determining, by the base station (102a-b), the time when the at least one node (104a-f) will switch to the receiving mode on the basis of the received announcement message and the determined interval; and
- sending, by the base station (102a-b), at least one message to the at least one node (104a-f) at the determined time.

2. Method for operating a node in a system comprising a base station (102a-b) and a plurality of nodes (104a-f) in wireless communication with said base station (102a-b), the method comprising:
- alternatingly switching the node (104a-f) between a sending mode, wherein the node (104a-f) sends consecutive messages at a regular interval to the base station (102a-b), and a receiving mode, wherein the node (104a-f) receives at least one message from the base station (102a-b),
wherein, in the sending mode, the node (104a-f) sends an announcement message indicating when the node (104a-f) will switch to the receiving mode.

3. Method for operating a base station (102a-b) in a system comprising the base station (102a-b) and plurality of nodes (104a-f) in wireless communication with the base station (102a-b), the method comprising:
- receiving, by the base station (102a-b), consecutive messages sent by at least one node (104a-f);
- determining, by the base station (102a-b), the interval between the consecutive messages received from the at least one node (104a-f);
- receiving, by the base station (102a-b), an announcement message indicating when the at least one node (104a-f) will switch to a receiving mode;
- determining, by the base station (102a-b), the time when the at least one node (104a-f) will switch to the receiving mode on the basis of the received announcement message and the determined interval; and
- sending, by the base station (102a-b), at least one message to the at least one node (104a-f) at the determined time.

4. Method according to any preceding claim, wherein the regular interval between the consecutive messages in the sending mode of a first node (104a-f) of the plurality of nodes (104a-f) differs from the regular interval between the consecutive messages in the sending mode of a second node (104a-f) of the plurality of nodes (104a-f).

5. Method according to any preceding claim, wherein the announcement message comprises data indicative for the number of remaining messages to be sent, and preferably wherein more than one of the consecutive messages includes an announcement message, each announcement message comprising data indicative for the number of remaining messages to be sent.

6. Method according to claim 5, when depending on claim 1 or 3, wherein determining of the time when the at least one node (104a-f) will switch to the receiving mode comprises multiplying the number of remaining messages by the interval determined by the base station (102a-b).

7. Method according to any preceding claim, wherein the time between sending the last of the consecutive messages and the start of the receiving mode corresponds to the regular interval.

8. Method according to any of the preceding claims, the system comprising at least two base stations (102a-b) each in wireless communication with a plurality of nodes (104a-f) and further comprising a processing unit (100) in communication with the at least two base stations (102a-b), wherein each base station (102a-b) comprises a received signal strength indication, RSSI, measurement unit for determining a RSSI parameter of nodes communicating with said base station (102a-b), the method comprising:
- determining, by each base station (102a-b), the RSSI parameter of the nodes (104a-f) communicating with said base station (102a-b) using the RSSI measurement unit;
- sending, by each base station (102a-b), the determined RSSI parameters to the processing unit (100); and
- selecting, by the processing unit (100), a single one of the at least two base stations (102a-b) as the base station (102a-b) for sending the at least one message to the at least one node (104a-f), on the basis of the RSSI parameter of the at least one node (104a-f).

9. Method according to any of the preceding claims, the system (2) comprising a processing unit (100), wherein at least one node (104a-f) comprises a visual indicator unit (118) arranged to indicate whether said at least one node (104a-f) is in a first state, a second state or a third state, the method comprising:
- receiving, by the at least one node (104a-f), a trigger signal, wherein the at least one node (104a-f) preferably comprises at least one sensor (116) and the trigger signal is generated by the at least one node (104a-f) based on the output of the at least one sensor (116);
- if the at least one node (104a-f) is in the first state, switching the at least one node (104a-f) to the second state upon receipt of the trigger signal and sending a state indication message from the at least one node (104a-f) to the processing unit (100);
- receiving, by the processing unit (100), the state indication message sent by the at least one node (104a-f);
- determining, by the processing unit (100), that the at least one node (104a-f) is in the second state on the basis of the received state indication message,
- determining, by the processing unit (100), the location of the node (104a-f);
- determining, by the processing unit (100), whether the location of the node (104a-f) corresponds to a predetermined location;
- if the processing unit (100) determines that the location of the node (104a-f) corresponds to the predetermined location and the node (104a-f) is in the second state: sending, by the processing unit (100), a state control message to the node (104a-f); and
- switching the at least one node (104a-f) to the third state upon receiving the state control message.

10. Method according to claim 9, wherein the trigger signal is generated by the system (2) and send to the at least one node (104a-f), wherein the trigger signal is preferably generated by the system (2) if the current date is equal to a predetermined date recorded for the at least one node (104a-f).

11. Method according to any of the preceding claims, further comprising the step of performing error-checking the communication.

12. Method according to any of the preceding claims, the system being arranged for localisation of the nodes (104a-f), comprising:
- receiving, by a first node (104a-f), a signal from a second node (104a-f);
- determining, by the first node (104a-f), a received signal strength indication, RSSI, parameter of a second node (104a-f) on the basis of the received signal;
- determining, via or by the first node (104a-f), if the RSSI parameter satisfies a predetermined condition;
- if the first node (104a-f) determines that the RSSI parameter of the second node (104a-f) satisfies the predetermined condition, sending, by the first node (104a-f), a message to the processing unit including an identifier of the second node (104a-f);
- linking, by the processing unit, the second node (104a-f) to the first node (104a-f) upon receipt of the message from the first node (104a-f);
- determining, by the processing unit, the location of the second node (104a-f) as the location of the first node (104a-f) when the second node (104a-f) is linked to the first node (104a-f); and.
- optionally, the step of scanning or identifying a device in the close vicinity of a node (104a-f) and coupling the device with the node (104a-f).

13. System arranged to carry out the method according to any of the claims 1-12.

14. Medical equipment provided with a node (104a-f) arranged to carry out the method according to any of the claims 1-12 when depending on claim 2.

15. Computer program arranged to, when executed on a computer, execute the steps of any of the claims 1-12.
